# EUROPÄISCHE PATENTSCHRIFT

(11) **EP 0 799 593 B1**
(45) Veröffentlichungstag und Bekanntmachung des Hinweises auf die Patenterteilung: **28.07.1999**
(21) Anmeldenummer: 97102490.6
(22) Anmeldetag: 15.02.1997
(51) Int. Cl.: A47J 43/07, A47J 43/10

(54) **Rührwerkzeug für ein Küchengerät zum Rühren und Schlagen von Lebensmitteln**
Mixing tool for a food processor for mixing and beating food products
Outil de mixage pour un appareil de cuisine pour mélanger et mousser de la nourriture

(30) Priorität: 06.04.1996 DE 19613951
(43) Veröffentlichungstag der Anmeldung: 08.10.1997
(73) Patentinhaber: Braun Aktiengesellschaft, Frankfurt am Main (DE)
(72) Erfinder: Kamprath, Karl-Heinz, 65207 Wiesbaden (DE); Lorenz, Marga, 60316 Frankfurt am Main (DE)

(56) Entgegenhaltungen:
- EP-A- 0 042 681
- DE-C- 322 351
- FR-A- 2 409 033
- GB-A- 2 081 115
- US-A- 1 372 578
- US-A- 1 918 738
- US-A- 4 175 875

## Beschreibung

Die vorliegende Erfindung betrifft ein Rührwerkzeug für ein Küchengerät zum Rühren und Schlagen von Lebensmitteln, inbesondere zum Herstellen von Sahne, unter Einbringung von Luft, mit einem antreibbaren Nabenteil, von dem sich radial zu dessen Antriebsachse mindestens ein Arm mit Stegen erstreckt.

Solche Rührwerkzeuge werden an die Abtriebswelle von Küchengeräten, bei denen es sich um stationäre Geräte oder um in der Hand haltbare Antriebseinheiten handeln kann, aufgesteckt. Mit solchen Rührwerkzeugen können beispielsweise Sahne, Eiweiß, leichte Teige, wie Bisquit-Teige, Cremespeisen und Mayonaise, geschlagen werden. Dabei wird gefordert, daß zum einen eine gute Durchmischung des Rührguts erfolgt, zum anderen ständig Luft in dieses eingebracht wird, um unter anderem eine lockere Masse zu erhalten. Hierbei soll natürlich kein Spritzen auftreten, insbesondere dann, wenn die Lebensmittel in einem oben offenen Behälter gerührt und geschlagen werden. Schließlich sollen diese Rührwerkzeuge als einfache Bauteile herstellbar sein, aber dennoch den vorstehend angegebenen Anforderungen gerecht werden.

Ein Rührwerkzeug ist beispielsweise aus der EP-A- 0 410 527 bekannt. Dieses Rührwerkzeug, das auch als Quirl bezeichnet wird, weist einen Schaft bzw. ein Nabenteil auf, von dem sich radial, gleichmäßig um den Umfang des Nabenteils verteilt, halbkreisförmige Stege erstrecken. Jeweils benachbarte Stege ergänzen sich in der radialen Projektion aufeinander zu einem Kreisbogen. Die äußeren Enden der halbkreisförmigen Stege sind mit einem in radialem Abstand zu der Antriebsachse des Nabenteils verlaufenden Ring verbunden. Beim Drehen des Werkzeugs laufen diese Stege auf identischen Bahnen um die Drehachse, so daß identische Zonen der zu rührenden oder zu schlagenden Masse durchlaufen werden. Eine zusätzliche Mischung kann nur dadurch erzielt werden, daß das Rührwerkzeug, mit einem Handgerät verbunden, durch die zu rührende Masse bewegt wird, so daß der Drehbewegung des Rührwerkzeugs eine zusätzliche Bewegung überlagert wird.

Ein weiteres Rührwerkzeug ist aus der DE-OS 29 02 855 bekannt. An einem Metallschaft sind mehrere Rührarme in radialem Abstand zu der Drehachse und annähernd parallel dazu vorgesehen, die an ihren unteren Enden mit einem Querteil, das etwa senkrecht zu der Drehachse verläuft, verbunden sind. Dieses Querteil weist die Form einer schräggestellten Fläche auf, so daß die zu bearbeitende Masse bzw. das Rührgut aufgrund der Querstellung der Querstrebe von unten nach oben gefördert wird. Hierdurch soll das sich unmittelbar auf dem Boden des Rührgefäßes befindliche Gut mit in den Rühr- bzw. Schlagvorgang einbezogen werden.

Weiterhin ist aus der DE-C 707 300 ein Mischgerät bekannt, mit einem Behälter, im Bereich dessen Boden eine flache Zentrifugalscheibe angeordnet ist. Diese Zentrifugalscheibe besitzt ein Nabenteil, an dem sich radial erstreckende Speichen angeordnet sind. Radial zu der Drehachse dieser Zentrifugalscheibe ist eine obere, kreisringförmige Abdeckplatte, die an den Enden dieser Speichen befestigt ist, vorgesehen, unterhalb derer sich radial erstreckende Rippen befestigt sind. Zwischen dem Nabenteil und dem Abdeckring sind Durchbrechungen vorhanden, über die bei der Drehung dieser Zentrifugalscheibe die zu rührende und zu mischende Masse von oberhalb des Werkzeugs angesaugt wird und dann radial nach außen zu den Rippen hin aufgrund der auftretenden Zentrifugalkräfte gefördert wird, um dann am Ende der sich radial erstreckenden Rippen aus dem Bereich des Rührwerkzeugs auszutreten.

Schließlich ist noch aus der EP-A-0 042 681 (vgl. Oberbegriff des Anspruchs 1) ein Rührwerkzeug für ein Küchengerät der eingangs genannten Art zum Rühren und Schlagen von Lebensmitteln bekannt, bei dem senkrecht zur Antriebsachse verlaufende Arme ausgebildet sind, von denen sich im wesentlichen parallel zur Antriebsachse verlaufende Stege weg erstrecken. Die Stege bilden im Querschnitt ein Tropfenprofil. Mit Ausnahme von einem Steg verlaufen die restlichen fünf Stege in einem Winkel von 30° nach außen, wobei ihre Spitzen in Drehrichtung gesehen am hinteren Ende ausgebildet sind. Der der Antriebsachse am nächsten benachbarte Steg verläuft gegenüber den anderen Stegen um etwa 45° versetzt. Weiterhin liegen die Stege auf unterschiedlichen Radien, so daß möglichst viel Nahrungsmittel beim Rührvorgang von den Stegen erfaßt werden.

Ausgehend von dem vorstehend angegebenen Stand der Technik liegt der vorliegenden Erfindung die Aufgabe zugrunde, ein Rührwerkzeug zu schaffen, das eine gute Durchmischung des zu rührenden und zu schlagenden Rührguts unter gleichzeitiger Einbringung eines hohen Luftanteils erzielt und das sich darüberhinaus leicht reinigen läßt.

Diese Aufgabe wird bei einem Rührwerkzeug der eingangs beschriebenen Art durch die kennzeichnenden Merkmale des Anspruchs 1 gelöst. Durch die unterschiedlich stark gekrümmten oder gewölbten, also tragflächenähnlichen Profilflächen entsteht an der kürzeren (weniger gewölbten oder sogar nach innen zum Steg leicht ausgehöhlten) Profilfläche ein Unterdruck gegenüber der längeren (stärker gewölbten) Profilfläche, so daß hinter den Stegen, also dort, wo die Nahrungsanteile wieder zusammentreffen, eine bessere Durchmischung erfolgt. Durch den Unterdruck an der kürzeren Profilfläche werden Luftblasen besser in die Nahrungsmittel, insbesondere beim Schlagen von Sahne eingebunden, so daß eine besonders feste Schlagsahne in kürzester Bearbeitungszeit hergestellt wird. In Bezug auf das erfindungsgemäße Rührwerkzeug mit unterschiedlich stark gekrümmten oder unterschiedlich stark gewölbten Profilflächen liegt die stärker gewölbte Profilfläche auf der der Antriebsachse abgewandten Seite, d.h. radial außen, wodurch eine günstige Verwirbelung an der abströmseitigen Kante der jeweiligen Stege erzielt wird, so daß die Lufteinbringung in das Rührgut hierdurch unterstützt wird.

Ein strömungsgünstiges und zu guten Verwirbelungen mit Lufteinschluß führendes Profil der Stege wird durch die Ausbildung der Stege gemäß Anspruch 2 erzielt. Weiterhin kann durch die Form des Flügel- oder Tropfenquerschnittsprofils die Stärke der Verwirbelung des Rührguts, wenn dieses Profil die Masse durchdringt, eingestellt werden, beispielsweise dadurch, daß das Querschnittsprofil in radialer Richtung gesehen auf der einen Seite stärker gewölbt ist als auf der anderen Seite, so daß beidseitig des Profils unterschiedliche Strömungsgeschwindigkeiten der Oberfläche des Profils relativ zu der Masse erhalten werden. In Bezug auf beispielsweise ein tropfenförmiges Querschnittsprofil sollten derart ausgebildete Stege so orientiert sein, daß das schmalere Profilquerschnittsende das anströmseitige Profilquerschnittsende bildet (Anspruch 4). Durch die Merkmale des Anspruchs 3 weisen die Stege untereinander unterschiedlich stark gewölbte Profilflächen auf, wenn ihre Mittelebenen auf einzelnen Kreisbahnen liegen, deren Krümmungsmittelpunkt mit der Drehachse zusammenfällt.

Um zum einen einen stabilen Aufbau zu erhalten, gerade wenn sehr kleine Querschnittsprofile gewählt werden, zum anderen dennoch eine gute Reinigung zu gewährleisten, werden die Stege, gemäß Anspruch 5, zwischen einem oberen und einen unteren Abdeckteil gehalten. Diese Abdeckteile verlaufen vorzugsweise etwa parallel zueinander und jeweils senkrecht zu der Antriebsachse. Durch diesen fächerartigen Aufbau der Rührarme wird die gesamte Masse, die die Stege durchläuft, gleichmäßig gerührt und gemischt. Durch eine Vielzahl von Stegen werden Verwirbelungen in der Masse erzeugt, so daß Luft in die Masse eindringen kann. Weiterhin können die Querschnittsprofile der Stege sehr flach und in Bezug auf die Anströmkante schlank gehalten werden, so daß der Widerstand beim Rühren gering ist, auch wenn eine große Anzahl von Stegen eingesetzt wird. Da sich die Stege im wesentlichen in Richtung der Antriebsachse erstrecken, ist bei einem Einsatz dieses Rührwerkzeuges in einen auf der Oberseite offenen Behälter praktisch kein Spritzen zu beobachten. Letztendlich ist auch eine einfache Reinigungsmöglichkeit gegeben, da solche Stege von allen Seiten gut zugänglich sind, um nach dem Rühren daran verbleibende Lebensmittelreste zu entfernen.

Vorzugsweise werden gemäß Anspruch 6 zwei der vorstehend beschriebenen Arme vorgesehen, die sich radial gegenüberliegend von der Nabe erstrecken, so daß die Eigenmassen des Rührwerkzeugs gleichmäßig um die Nabe herum verteilt sind und somit der Schwerpunkt des Geräts auf der Drehachse liegt.

Als weitere Maßnahme, die Durchmischung des Rührguts zu erhöhen, werden die Stege derart geringfügig geneigt, daß die unteren Enden der Stege, d.h. diejenigen Enden, die in Richtung des freien Endes des Nabenteils weisen, die voranführenden Enden bilden, während die oberen Enden der Stege hinter diesen unteren Enden zurückversetzt verlaufen (Anspruch 7).

Ein erhöhter Rühreffekt ist nach Anspruch 8 dadurch gegeben, daß die anströmseitigen Enden auf einem Kreisbogenabschnitt liegen, der in Anströmrichtung konkav gewölbt ist.

Eine weitere bevorzugte Anordnung der einzelnen Stege ergibt sich dann, wenn die anströmseitigen Enden, von dem innersten Steg, der am nächsten zu dem Nabenteil hin liegt, zu dem am weitesten radial außenliegenden Steg gesehen, entlang eines Kreisbogenabschnitts verlaufen, der in Anströmrichtung konkav gewölbt ist (Anspruch 8).

Hierdurch wird erreicht, daß die Nahrungsmittel nicht allzu heftig durchgemischt werden, sondern der Kreisbewegung des Rührwerkzeugs folgen.

Um einen weiteren, zusätzlichen Mischeffekt in radialer Richtung von der Antriebsachse gesehen zu erreichen, werden, gemäß Anspruch 10, die unteren Enden der Stege, die in Richtung des freien Endes des Nabenteils weisen, in einem radial näheren Abstand zu der Antriebsachse liegend angeordnet als die entsprechenden, jeweiligen oberen Enden des Steges. Gerade in dem Bereich, der nahe dem Nabenteil des Rührwerkzeugs liegt, wo eine geringere Relativgeschwindigkeit zwischen den Stegen und dem Rührgut als an den radial außenliegenden Stegen auftritt, kann dadurch der Misch- und Rühreffekt sowie die Verwirbelung, um Luft in das Rührgut einzubringen, erhöht werden.

Es wird verständlich werden, daß die Neigung der Stege auch derart vorgesehen sein kann, daß die obenliegenden Enden näher zu dem Nabenteil liegen als die unteren Enden; die besseren Rühr- und Mischeffekte werden allerdings in der umgekehrten, vorstehend angegebenen Anordnung erreicht, da dadurch dem Rührgut eine Richtungskomponente beim Rühren von unten nach oben verliehen wird.

Um in etwa gleich starke Misch- und Rühreffekte, und zwar trotz der unterschiedlichen Relativgeschwindigkeiten zwischen Stegen und Rührgut in Bezug auf die radiale Beabstandung der Stege zu der Antriebsachse, zu erzielen, sollte der Strömungsanströmwinkel der jeweiligen Stege eines Armes gemäß Anspruch 12 so geändert werden, daß dieser Anströmwinkel mit zunehmendem Abstand von der Antriebsachse geringer wird. In Bezug auf diese Anordnung ist weiterhin zu bevorzugen, daß, gemäß Anspruch 13, das Querschnittsprofil des äußersten Stegs etwa symmetrisch zu einer Tangente verläuft, die an einen Kreis angelegt ist, dessen Mittelpunkt auf der Antriebsachse verläuft.

Bevorzugt sind benachbarte Stege eines Arms etwa 5 mm bis 10 mm voneinander beabstandet (Anspruch 14) und die Anzahl der Stege jedes Arms sollte zwischen 5 und 10 betragen. In Bezug auf die Profilquerschnittslänge in Anströmrichtung der Stege gesehen sollten diese, gemäß Anspruch 16, eine Länge von 5 mm bis 10 mm aufweisen, mit einer Breite quer dazu, d.h. senkrecht zu der Anströmrichtung bzw. in radialer Richtung, von 2 mm bis 5 mm (Anspruch 17). Das schmalere Profilquerschnittsende des tropfenförmigen Querschnittsprofils sollte mit einem Radius von etwa 0,5 bis 1 mm abgerundet werden (Anspruch 18). Die Länge der Stege sollte in Richtung der Antriebsachse gesehen, d.h., falls ein oberes Abdeckteil und ein unteres Abdeckteil gemäß Anspruch 5 vorgesehen sind, die Erstreckung der Stege zwischen diesen beiden Abdeckteilen, gemäß Anspruch 19 zwischen 30 mm und 50 mm, vorzugsweise etwa 35 mm, betragen.

Weitere Einzelheiten und Merkmale der Erfindung werden aus der nachfolgenden Beschreibung eines Ausführungsbeispiels anhand der Zeichnung ersichtlich. In der Zeichnung zeigt:
- Fig. 1: eine Seitenansicht eines erfindungsgemäßen Rührwerkzeugs, wobei der obere Teil des Nabenteils entlang der Antriebsachse geschnitten dargestellt ist,
- Fig. 2: eine Schnittansicht entlang der Schnittlinie II-II in Fig. 1,
- Fig. 3: eine vergrößerte Ansicht des rechten Arms der Fig. 2,
- Fig. 4: einen Schnitt entlang der Schnittlinie IV-IV in Fig. 3 in einem gegenüber der Fig. 3 verkleinerten Maßstab, und
- Fig. 5: einen Schnitt durch einen Steg senkrecht zu der Antriebsachse.

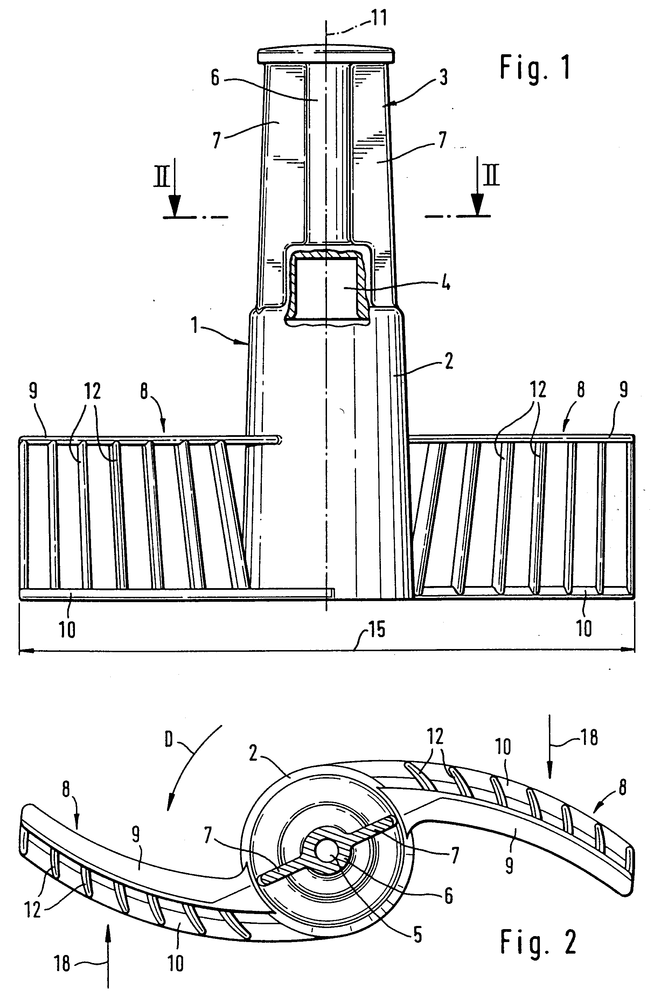

Das Rührwerkzeug, wie es die Fig. 1 zeigt, weist ein Nabenteil 1 mit einem unteren Hülsenteil 2 und einem oberen Fortsatz 3 auf. In das untere Hülsenteil 2 des Nabenteils 1, das an der Unterseite offen ist, kann eine nicht dargestellte Antriebsspindel eines stationären Küchengeräts aufgenommen werden, die in eine Aufnahme 4, die in Fig. 1 im Schnitt dargestellt ist, am oberen, inneren Ende des Hülsenteils 2 in eine dort ausgebildete, nicht näher dargestellte Verzahnung aufgenommen wird. Es besteht aber auch die Mölgichkeit, ein solches Rührwerkzeug an dem oberen Ende des Fortsatzes 3 über eine Antriebswelle, die in eine Bohrung 5, die in Fig. 2 zu sehen ist, in dem Rohrfortsatz 6 eingesteckt und fest verankert wird, anzutreiben. Der Rohrfortsatz 6 ist auf der Außenseite durch zwei Flächenelemente 7 zusätzlich ausgesteift.

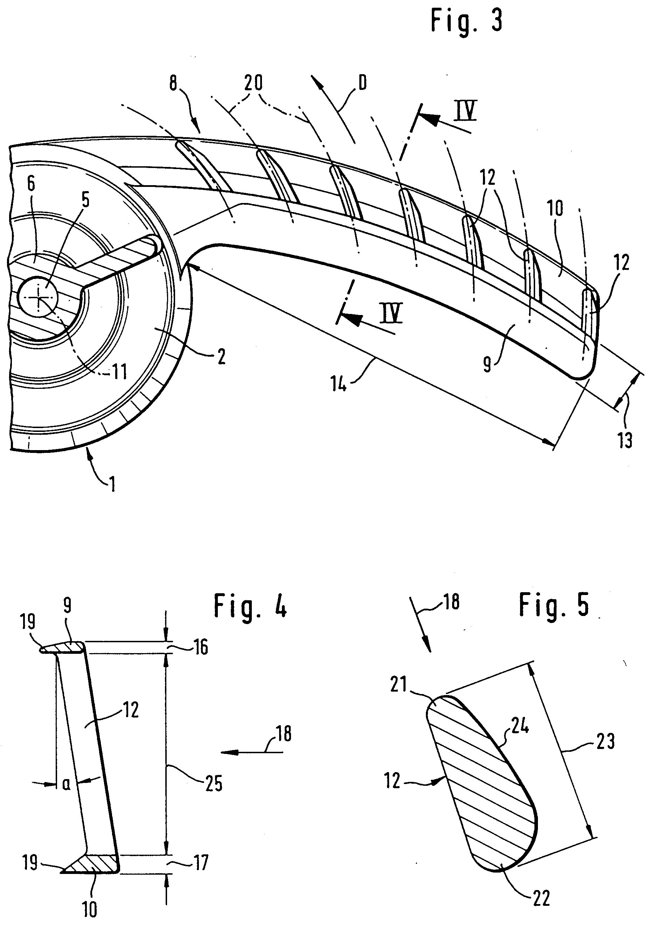

Im unteren Bereich des Nabenteils 1, d.h. an dem unteren Bereich des Hülsenteils 2, sind zwei Arme 8 vorgesehen. Jeder Arm 8 besitzt ein oberes Abdeckteil 9 und ein unteres Abdeckteil 10, die parallel zueinander beabstandet sind, wie die Figuren 1 und 4 zeigen und die sich senkrecht zu der Drehachse 11 des Rührgeräts erstrecken. Zwischen dem oberen Abdeckteil 9 und dem unteren Abdeckteil 10 verlaufen einzelne Stege 12, die im Querschnitt, d.h. im Schnitt senkrecht zu der Drehachse 11, ein tropfen- oder tragflächenähnliches Profil aufweisen, wie es in der Fig. 5 vergrößert dargestellt ist. Die Abdeckteile 9 und 10 weisen eine Breite, in Fig. 3 an dem oberen Abdeckteil 9 mit dem Bezugszeichen 13 bezeichnet, von etwa 7 mm auf, während die Länge des gesamten Arms 8, mit dem Bezugszeichen 14 in Fig. 3 bezeichnet, etwa 60 mm beträgt, wobei der gesamte Durchmesser 15 des Rührwerkzeugs (Fig. 1) 150 mm beträgt.

Die Höhe 25 der Stege 12, d.h. ihre Erstreckung zwischen dem oberen Abdeckteil 9 und dem unteren Abdeckteil 10, beträgt etwa 35 mm. Wie weiterhin in Fig. 4 zu erkennen ist, besitzt das obere Abdeckteil 9 eine Dicke 16 von etwa 2 mm, während das untere Abdeckteil 10 eine Dicke 17 von etwa 3 mm besitzt. Während das obere und das untere Abdeckteil 9, 10 auf deren Anströmseite (die Anströmrichtung ist in Fig. 4 durch den Pfeil 18, während die Drehrichtung des Rührwerkzeugs durch den Pfeil D in Fig. 2 und 3 angedeutet ist) relativ stumpfe Kanten aufweisen, sind die stromabwärts liegenden Kanten abgeschrägt (unteres Abdeckteil 10) bzw. mit einem kleineren Radius als die Anströmseite abgerundet, so daß eine relativ scharfe Strömungs-Abrißkante an den beiden Abdeckteilen 9, 10 erreicht wird. Dieses Profil bewirkt beim Drehen des Rührwerkzeugs, daß die Nahrungsmittel an den hinteren Kanten 22 (dickeres Ende) förmlich wieder zusammenschlagen und so eine bessere Vermischung hervorrufen.

Wie weiterhin anhand der Figuren 2, 3 und 4 zu erkennen ist, sind die jeweiligen Stege 12 geringfügig geneigt derart, daß deren untere Kante bzw. das etwa bündig mit der Kante abschließende untere Abdeckteil 10 in einer senkrechten Projektion, d.h. in Richtung der Drehachse 11 des Rührwerkzeugs gesehen, weiter vorsteht als die obere Kante der Stege 12 bzw. des oberen Abdeckteils 10. Der Neigungswinkel a (Fig. 4) beträgt etwa 12°, oder anders ausgedrückt stehen die unteren Kanten der Stege gegenüber den oberen Kanten der Stege 12 um 6 bis etwa 7 mm vor. Eine solche Schrägstellung der Stege 12 bringt den Effekt mit sich, daß die Nahrungsmittel nicht während der Umdrehung des Rührwerkzeuges in senkrechter Sicht aufeinmal sondern nacheinander von diesen Kanten erfaßt werden, was weniger Kraftaufwand erfordert.

Die beiden Arme 8 sind, wie in Fig. 2 zu sehen ist, jeweils zu der Anströmrichtung 18 hin konvex gewölbt, so daß sich die beiden Arme zu einer S-förmigen Gestalt ergänzen. Wie in Fig. 3 angedeutet ist, liegen die einzelnen Stege in Bezug auf die Längserstreckung ihres Querschnitts bzw. in Bezug auf Ihre Mittelebene auf einzelnen Kreisbahnen, durch die strichpunktierten Kreislinien 20 angedeutet, deren Krümmungsmittelpunkt mit der Drehachse 11 zusammenfällt. Die jeweiligen Beabstandungen der Radien bzw. Kreisbahnen 20 zueinander und damit der mittlere Abstand benachbarter Stege 12 zueinander beträgt etwa 7,5 mm.

Wie anhand der Fig. 3, insbesondere aber anhand der Fig. 5, zu sehen ist, besitzen die Stege 12 ein tropfen- oder tragflächenähnliches Profil. Das verjüngte Ende 21 des Profilquerschnitts bildet das anströmseitige Ende, während das dickere Ende 22 die Abrißkante der jeweiligen Stege 12 bildet. Die stärker gewölbte Außenseite 24 des Profils ist auf der der Drehachse bzw. Antriebsachse 11 abgewandten, außenliegenden Seite vorgesehen.

Das verjüngte, anströmseitige Ende 21 der Stege 12 ist mit einem Radius von etwa 0,5 mm abgerundet, während das dickere, strömungsabrißseitige Ende 22 mit einem Radius zwischen 0,7 und 1 mm abgerundet ist; die breiteste Stelle des Querschnittsprofils im hinteren, strömungsabrißseitigen Bereich beträgt etwa 2 mm. Die Länge 23 des Profilquerschnitts der Stege beträgt etwa 5 mm.

Aufgrund der konvexen Wölbung der Arme 8 bzw. der Abdeckteile 9 und 10 und damit des bogenförmigen Verlaufs in Bezug auf die Lage der anströmseitigen Kanten der Stege 12 erscheinen die äußeren Stege 12 in der Darstellung der Fig. 1 etwa parallel zu der Drehachse 11 verlaufend, während die näher zu der Drehachse 11 liegenden Stege geneigt erscheinen.

Das Rührwerkzeug kann als Spritzgußteil aus Kunststoff, vorzugsweise aus Polypropylen, hergestellt werden, das trotz der komplizierten Struktur aufgrund der Vielfalt der Stege und der Abdeckteile, die die Arme 8 bilden, leicht auf einem Spritzgießwerkzeug entformbar ist, wenn die Anzahl der Arme 8 auf zwei Arme, wie dies in den Figuren dargestellt ist, begrenzt wird. Durch die Vielzahl der Stege 12 sowie aufgrund deren Querschnittsprofile in Tropfen- oder Tragflächenform wird beim Rühren von Lebensmitteln ein großer Luftanteil in die gerührte Masse eingebracht, was sich besonders vorteilhaft beim Schlagen von Sahne oder zur Herstellung von lockeren Backwaren, wie beispielsweise Bisquit-Backwaren auswirkt. Weiterhin ist dieses Gerät insbesondere auch in einer Geschirrspülmaschine gut reinigbar, da alle Flächen der Stege und Abdeckteile leicht zugänglich sind.

## Patentansprüche

1. Rührwerkzeug für ein Küchengerät zum Rühren und Schlagen von Lebensmitteln, insbesondere zum Herstellen von Sahne, unter Einbringung von Luft mit einem um eine Antriebsachse (11) rotierbaren Nabenteil (1), von dem sich radial zur Antriebsachse (11) mindestens ein Arm (8) mit querverlaufenden Stegen (12) erstreckt, wobei die Mantelfläche eines Steges (12) von einer Profilfläche (24) gebildet wird,
**dadurch gekennzeichnet,**
daß die der Antriebsachse (11) abgewandte Außenseite der Profilfläche (24) stärker gewölbt ist als die der Antriebsachse (11) zugewandte Innenseite.

2. Rührwerkzeug nach Anspruch 1,
**dadurch gekennzeichnet,**
daß der Steg (12) im Querschnitt senkrecht zu der Antriebsachse eine flügel- oder tropfenförmige Profilfläche (24) aufweist.

3. Rührwerkzeug nach Anspruch 1,
**dadurch gekennzeichnet,**
daß die Stege untereinander unterschiedlich stark gewölbte Profilflächen (24) aufweisen.

4. Rührwerkzeug nach Anspruch 1,
**dadurch gekennzeichnet,**
daß der Querschnitt der Profilfläche (24) derart orientiert ist, daß das schmalere Profilquerschnittsende (21) das anströmseitige Profilquerschnittsende bildet.

5. Rührwerkzeug nach Anspruch 1,
**dadurch gekennzeichnet,**
daß die Stege (12) jeweils einen unterschiedlichen radialen Abstand zu der Antriebsachse (11) aufweisen und sich im wesentlichen in Richtung der Antriebsachse (11) erstrecken und daß die Stege (12) am Arm (8) jeweils zwischen einem oberen und einem unteren Abdeckteil (9, 10) gehalten sind.

6. Rührwerkzeug nach Anspruch 5,
**dadurch gekennzeichnet,**
daß zwei Arme (8) radial gegenüberliegend an dem Nabenteil (1) angeordnet sind.

7. Rührwerkzeug nach Anspruch 1,
**dadurch gekennzeichnet,**
daß die unteren, in Richtung des freien Endes des Nabenteils (1) weisenden Enden der Stege (12), in Drehrichtung gesehen, gegenüber den oberen Enden die voranführenden Enden bilden.

8. Rührwerkzeug nach Anspruch 1,
**dadurch gekennzeichnet,**
daß die anströmseitigen Enden auf einem Kreisbogenabschnitt liegen, der in Anströmrichtung konkav gewölbt ist.

9. Rührwerkzeug nach Anspruch 1,
**dadurch gekennzeichnet,**
daß die Stege in ihrer Längserstreckung relativ zur Antriebsachse geneigt sind. wobei die unteren, in Richtung des freien Endes des Nabenteils weisenden Enden der Stege in einem radial näheren Abstand zu der Antriebsachse liegen als die oben liegenden Enden.

10. Rührwerkzeug nach Anspruch 9,
**dadurch gekennzeichnet,**
daß die unteren, in Richtung des freien Endes des Nabenteils weisenden Enden der Stege in einem radial näheren Abstand zu der Antriebsachse liegen als die oben liegenden Enden.

11. Rührwerkzeug nach Anspruch 9,
**dadurch gekennzeichnet,**
daß der Neigungswinkel der jeweiligen Stege zu der Antriebsachse mit von dem am nächsten zu der Antriebsachse liegenden Steg zu dem am weitesten von der Antriebsachse beabstandeten Steg geringer wird.

12. Rührwerkzeug nach Anspruch 1,
**dadurch gekennzeichnet,**
daß der Strömungsanstellwinkel der jeweiligen Stege (12) mit zunehmendem Abstand von der Antriebsachse geringer ist.

13. Rührwerkzeug nach Anspruch 12,
**dadurch gekennzeichnet,**
daß das Querschnittsprofil des äußersten Stegs etwa symmetrisch zu einer Tangente angelegt an einen Kreis (20) mit auf der Antriebsachse (11) liegendem Mittelpunkt verläuft.

14. Rührwerkzeug nach Anspruch 1,
**dadurch gekennzeichnet,**
daß benachbarte Stege (12) etwa 5 mm bis 10 mm voneinander beabstandet sind.

15. Rührwerkzeug nach Anspruch 1,
**dadurch gekennzeichnet,**
daß jeder Arm (8) zwischen 5 und 10 Stege aufweist.

16. Rührwerkzeug nach Anspruch 1,
**dadurch gekennzeichnet,**
daß die Stege (12) im Querschnitt senkrecht zu der Antriebsachse (11) in Anströmrichtung gesehen eine Profilquerschnittslänge (23) von 5 mm bis 10 mm aufweisen.

17. Rührwerkzeug nach Anspruch 1,
**dadurch gekennzeichnet,**
daß die Stege (12) im Querschnitt senkrecht zu der Antriebsachse (11) in radialer Richtung von der Antriebsachse gesehen eine maximale Profilquerschnittsbreite von etwa 2 mm bis 5 mm aufweisen.

18. Rührwerkzeug nach Anspruch 4,
**dadurch gekennzeichnet,**
daß das schmalere Profilquerschnittsende (21) mit einem Radius von 0,5 mm bis 1 mm abgerundet ist.

19. Rührwerkzeug nach Anspruch 1,
**dadurch gekennzeichnet,**
daß die Stege, in Richtung der Antriebsachse gesehen, eine Länge von 30 mm bis 50 mm, vorzugsweise etwa 35 mm, aufweisen.

20. Rührwerkzeug nach Anspruch 1,
**dadurch gekennzeichnet,**
daß das Rührwerkzeug aus Kunststoff gebildet ist.

## Claims

1. Beater tool for a food processor for agitating and beating foods, especially for making whipped cream, by introducing air by way of a hub part (1) which is rotatable about a drive axis (11) and has at least one arm (8) with transversely running blades (12) extend radially to the drive axis (11), wherein the peripheral surface of a blade (12) is formed by a profile surface (24),
**characterized** in that the outside of the profile surface (24) remote from the drive axis (11) is more arcuate than its inside surface close to the drive axis (11).

2. Beater tool as claimed in claim 1,
**characterized** in that the blade (12), in a cross-section vertically to the drive axis, has a vane-type or drip-shaped profile surface (24).

3. Beater tool as claimed in claim 1,
**characterized** in that the individual blades have profile surfaces (24) of a differently arcuate shape.

4. Beater tool as claimed in claim 1,
**characterized** in that the cross-section of the profile surface (24) is so oriented that the smaller cross-sectional profile end (21) is the cross-sectional profile end which faces the approach flow.

5. Beater tool as claimed in claim 1,
**characterized** in that the blades (12) have different radial distances from the drive axis (11) and extend generally in the direction of the drive axis (11), and in that the blades (12) are retained on the arm (8) respectively between an upper and a lower cover portion (9, 10).

6. Beater tool as claimed in claim 5,
**characterized** in that two arms (8) are arranged radially oppositely on the hub part (1).

7. Beater tool as claimed in claim 1,
**characterized** in that the lower ends of the blades (12) pointing to the direction of the free end of the hub part (1), when viewed in the direction of rotation, are the leading ends in relation to the upper ends.

8. Beater tool as claimed in claim 1,
**characterized** in that the ends on the side of the approach flow lie on a circle-arc portion which is concavely curved in the direction of the approach flow.

9. Beater tool as claimed in claim 1,
**characterized** in that the blades in their longitudinal extension are inclined relative to the drive axis, and the lower ends of the blades which point in the direction of the free end of the hub part have a smaller radial distance from the drive axis than the upper ends.

10. Beater tool as claimed in claim 9,
**characterized** in that the lower ends of the blades which point in the direction of the free end of the hub part have a smaller radial distance from the drive axis than the upper ends.

11. Beater tool as claimed in claim 9,
**characterized** in that the angle of inclination of the respective blades in relation to the drive axis decreases from the blade which is closest to the drive axis to the blade which is most remote from the drive axis.

12. Beater tool as claimed in claim 1,
**characterized** in that the angle of attack of the respective blades (12) decreases with increasing distance from the drive axis.

13. Beater tool as claimed in claim 12,
**characterized** in that the cross-sectional profile of the outermost blade extends roughly symmetrically to a tangent to a circle (20) with the centre lying on the drive axis (11).

14. Beater tool as claimed in claim 1,
**characterized** in that adjacent blades (12) are spaced approximately 5 mms to 10 mms from each other.

15. Beater tool as claimed in claim 1,
**characterized** in that each arm (8) includes between 5 to 10 blades.

16. Beater tool as claimed in claim 1,
**characterized** in that the blades (12), when viewed in a cross-section vertically to the drive axis (11) in the direction of the approach flow, have a cross-sectional profile length (23) of 5 mms to 10 mms.

17. Beater tool as claimed in claim 1,
**characterized** in that the blades (12), when viewed in a cross-section vertically to the drive axis (11) in a radial direction from the drive axis, have a maximum cross-sectional profile width of approximately 2 mms to 5 mms.

18. Beater tool as claimed in claim 4,
**characterized** in that the smaller cross-sectional profile end (21) is rounded with a radius of 0.5 mms to 1 mm.

19. Beater tool as claimed in claim 1,
**characterized** in that the blades, when viewed in the direction of the drive axis, have a length of 30 mms to 50 mms, preferably about 35 mms.

20. Beater tool as claimed in claim 1,
**characterized** in that the beater tool is made of plastics material.

## Revendications

1. Outil de brassage pour un appareil de cuisine pour brasser et fouetter des denrées alimentaires, notamment pour la fabrication de crème, moyennant l'introduction d'air, comportant une partie formant moyeu (1), qui peut tourner autour d'un axe d'entraînement (11) et à partir duquel au moins un bras (8) possédant des barrettes transversales (12) s'étend radialement par rapport à l'axe d'entraînement (11), la surface enveloppe d'une barrette (12) étant formée par une surface profilée (24),
caractérisé en ce
que la face extérieure, située à l'opposé de l'axe d'entraînement (11), de la surface profilée (24) est cintrée plus fortement que la face intérieure tournée vers l'axe d'entraînement (11).

2. Outil de brassage selon la revendication 1, caractérisé en ce
que la barrette (12) possède, dans une coupe transversale perpendiculaire à l'axe d'entraînement, une surface profilée en forme d'aile ou à profil aérodynamique (24).

3. Outil de brassage selon la revendication 1, caractérisé en ce
que les barrettes possèdent des surfaces profilés (24) cintrées avec des degrés de cintrage différents.

4. Outil de brassage selon la revendication 1, caractérisé en ce
que la section transversale de la surface profilée (24) est orientée de telle sorte que l'extrémité la plus étroite (21) de la section transversale profilée forme l'extrémité de la section transversale profilée sur le côté d'incidence de l'écoulement.

5. Outil de brassage selon la revendication 1, caractérisé en ce
que les barrettes (12) sont situées à des distances radiales respectives variables de l'axe d'entraînement (11) et s'étendent sensiblement dans la direction de l'axe d'entraînement (11), et que les barrettes (12) sont retenues sur le bras (8) respectivement entre une partie supérieure et une partie inférieure de recouvrement (9, 10).

6. Outil de brassage selon la revendication 5, caractérisé en ce
que deux bras (8) sont disposés dans des positions radialement opposées sur la partie formant moyeu (1).

7. Outil de brassage selon la revendication 1, caractérisé en ce
que les extrémités inférieures des barrettes (12), qui sont orientées en direction de l'extrémité libre de la partie formant moyeu (1), forment, lorsqu'on regarde dans le sens de rotation, des extrémités avant par rapport aux extrémités supérieures.

8. Outil de brassage selon la revendication 1, caractérisé en ce
que les extrémités sur le côté d'incidence de l'écoulement sont situées sur une section d'arc de cercle, qui est cintrée avec une forme concave dans la direction d'incidence de l'écoulement.

9. Outil de brassage selon la revendication 1, caractérisé en ce
que sur leur étendue longitudinale, les barrettes sont inclinées par rapport à l'axe d'entraînement, les extrémités inférieures des barrettes, qui sont orientées en direction de l'extrémité libre de la partie formant moyeu, étant situées à une distance radiale plus faible de l'axe d'entraînement, que ne le sont les extrémités supérieures.

10. Outil de brassage selon la revendication 9, caractérisé en ce
que les extrémités inférieures des barrettes, qui s'étendent en direction de l'extrémité libre de la partie formant moyeu, sont situées à une distance radiale plus faible de l'axe d'entraînement, que ne le sont les extrémités supérieures.

11. Outil de brassage selon la revendication 9, caractérisé en ce
que l'angle d'inclinaison des barrettes respectives par rapport à l'axe d'entraînement diminue depuis la barrette, qui est la plus proche de l'axe d'entraînement jusqu'à la barrette qui est la plus éloignée de l'axe d'entraînement.

12. Outil de brassage selon la revendication 1, caractérisé en ce
que l'angle d'incidence de l'écoulement sur les barrettes respectives (12) diminue lorsque la distance par rapport à l'axe d'entraînement augmente.

13. Outil de brassage selon la revendication 12,
caractérisé en ce
que le profil en coupe transversale de la barrette la plus extérieure s'étend approximativement symétriquement par rapport à une tangente à un cercle (20), dont le centre est situé sur l'axe d'entraînement (11).

14. Outil de brassage selon la revendication 1, caractérisé en ce
les barrettes voisines (12) sont séparées les unes des autres par environ 5 mm à 10 mm.

15. Outil de brassage selon la revendication 1, caractérisé en ce
que chaque bras (8) possède entre 5 et 10 barrettes.

16. Outil de brassage selon la revendication 1, caractérisé en ce
que dans la coupe transversale perpendiculaire à l'axe d'entraînement (11), lorsqu'on regarde dans la direction d'incidence de l'écoulement, la section transversale du profil des barrettes (12) possède une longueur (23) comprise entre 5 mm et 10 mm.

17. Outil de brassage selon la revendication 1, caractérisé en ce
que dans une coupe transversale perpendiculaire à l'axe d'entraînement (11), la section transversale du profil des barrettes (12) possède dans une direction radiale, lorsqu'on regarde à partir de l'axe d'entraînement, une largeur maximale comprise entre environ 2 mm et 5 mm.

18. Outil de brassage selon la revendication 1, caractérisé en ce
que l'extrémité la plus étroite (21) de la section transversale du profil est arrondie avec un rayon compris entre 0,5 mm et 1 mm.

19. Outil de brassage selon la revendication 1, caractérisé en ce
que lorsqu'on regarde dans la direction de l'axe d'entraînement, les barrettes possèdent une longueur comprise entre 30 mm et 50 mm et de préférence égale à environ 35 mm.

20. Outil de brassage selon la revendication 1, caractérisé en ce
l'outil de brassage est réalisé en matière plastique.
